# EUROPEAN PATENT SPECIFICATION

(11) **EP 3 690 867 B1**
(45) Date of publication and mention of the grant of the patent: **11.06.2025**
(21) Application number: 19154376.8
(22) Date of filing: 30.01.2019
(51) Int. Cl.: G09C 1/00, H04L 9/32

(54) **FINGERPRINTING OF SEMICONDUCTOR DIE ARRANGEMENTS**
FINGERPRINTING VON HALBLEITERCHIPANORDNUNGEN
PRISE D'EMPREINTES DIGITALES D'AGENCEMENTS DE PUCE À SEMICONDUCTEUR

(43) Date of publication of application: 05.08.2020
(73) Proprietor: Siemens Aktiengesellschaft, 80333 München (DE)
(72) Inventor: Aschauer, Hans, 81829 München (DE); Falk, Rainer, 85586 Poing (DE); Feist, Christian Peter, 80689 München (DE); Fries, Steffen, 85598 Baldham (DE); Maftun, Aliza, 81549 München (DE); Seuschek, Hermann, 81373 München (DE); Zeschg, Thomas, 81543 München (DE)
(74) Representative: Siemens Patent Attorneys

(56) References cited:
- EP-A1- 3 032 421
- EP-A1- 3 113 409
- WO-A2-2011/018414
- US-A1- 2011 055 649
- US-A1- 2014 091 832
- US-A1- 2015 072 447
- US-B1- 9 444 618
- XIE YANG ET AL: "Security and Vulnerability Implications of 3D ICs", IEEE TRANSACTIONS ON MULTI-SCALE COMPUTING SYSTEMS, IEEE, vol. 2, no. 2, 1 April 2016 (2016-04-01), pages 108 - 122, XP011617662, DOI: 10.1109/TMSCS.2016.2550460
- JIN CHENG ET AL: "Built-in-self-test 3-D ring oscillator for stacked 3DIC", 2014 IEEE INTERNATIONAL SYMPOSIUM ON RADIO-FREQUENCY INTEGRATION TECHNOLOGY, IEEE, 27 August 2014 (2014-08-27), pages 1 - 3, XP032668425, DOI: 10.1109/RFIT.2014.6933251

## Description

### FIELD OF THE INVENTION

Various embodiments of the invention relate to semiconductor die arrangements and methods of monitoring the same. Various embodiments relate in particular to such die arrangements and corresponding methods of monitoring which enable detection of tampering of a topological arrangement of a plurality of semiconductor dies to one another.

### BACKGROUND OF THE INVENTION

In industrial environments, embedded devices like control units, industrial PCs, IoT and edge devices assume important tasks such as, for instance, controlling or monitoring of technical processes, and in doing so often carry out critical functions, in particular with reference to data and information security.

In addition, the devices are increasingly being networked, e.g., for remote control, or for diagnosis and analysis as a basis for subsequent optimization of a process. In industrial systems, field use of embedded devices often extends over long periods, for instance 10-20 years, or sometimes even 30 or 40 years, during which periods the devices are exposed to ever changing circumstances and potential security attacks.

Special passive and invasive attacks, such as side-channel attacks/probing, fault injection, depackaging and delayering of integrated circuits, on the hardware of such devices may result in security-critical functions and data being compromised.

Typical counteractive measures for detection and prevention of such attacks like, for instance, drilling protection (wire meshes), overmoulding of dies/packages using epoxy resin, use of security fuses, use of tamper sensors (detecting security-critical changes in temperature, voltage levels, clock signal properties, light, and/or radiation), monitoring of a current consumption or electromagnetic emission, or use of physical unclonable functions, PUF, typically protect individual integrated circuits or dies only.

Xie Yang et al. ("Security and Vulnerability implications of 3D ICs", IEEE Transactions on Multi-Scale Computing Systems, IEEE, 27 August 2014) discloses CMOS processors with integrated security primitives involving physical unclonable functions. US 9,444,618 Bl discloses a circuit for defending against attacks on ring oscillator-based physically unclonable functions. EP 3 113 409 A1 discloses a silicon integrated circuit comprising a physically unclonable function.

### BRIEF SUMMARY OF THE INVENTION

In view of the above, there is a need in the art for detection of tampering of a topological arrangement of semiconductor dies to one another. This equally relates to die arrangements within a same integrated circuit, IC, package, e.g., multi-chip modules, MCM, or system-in-package, SiP, to discrete die arrangements on printed circuit boards, PCB, or to combinations thereof.

These underlying objects of the invention are each solved by a die arrangement and a method of monitoring the same as defined by the independent claims. Preferred embodiments of the invention are set forth in the dependent claims.

According to a first aspect, a die arrangement is provided. The die arrangement comprises a plurality of dies; a physical interconnection structure extending between and traversing the plurality of dies, and being arranged for imparting unpredictable, yet reproducible properties to a digital signal being carried on the physical interconnection structure; and a monitoring logic for monitoring the properties of the digital signal.

The physical interconnection structure may comprise an electrically conducting structure.

The monitoring logic may be arranged for monitoring the properties of the digital signal against characteristic reference data of the digital signal.

The monitoring logic may be arranged for monitoring semantic properties of the digital signal.

The monitoring logic may be arranged for monitoring an eye opening of the digital signal.

The physical interconnection structure may form a ring oscillator, RO, structure; and the monitoring logic may be arranged for monitoring an oscillation frequency of the digital signal.

The characteristic reference data may be machine-learned.

The characteristic reference data may be determined using hard-coded rules.

The characteristic reference data may be determined while reducing time-varying environmental factors.

The monitoring logic may comprise storage means for the characteristic reference data.

The storage means may comprise at least one of a protected memory area and one or more chip fuses.

The monitoring logic may comprise an internal logic structure of at least one of the plurality of dies.

The monitoring logic may be arranged for generating a tamper event upon a breach of signal integrity.

According to a second aspect, a method of monitoring a die arrangement is provided. The underlying die arrangement comprises a plurality of dies and a physical interconnection structure extending between and traversing the plurality of dies. The method comprises a step of carrying a digital signal on the physical interconnection structure, wherein the physical interconnection structure is arranged for imparting unpredictable, yet reproducible properties to the digital signal. The method further comprises a step of monitoring the properties of the digital signal.

The method is performed for monitoring the die arrangement of various embodiments.

### BRIEF DESCRIPTION OF THE DRAWINGS

Embodiments of the invention will be described with reference to the accompanying drawings, in which the same or similar reference numerals designate the same or similar elements.
- Figs. 1 and 2: illustrate schematic die arrangements according to embodiments of the invention.
- Figs. 3 and 4: illustrate topological die arrangements according to embodiments of the invention.
- Fig. 5: illustrates a method of an embodiment of the invention, the method being for monitoring a die arrangement of various embodiments.

### DETAILED DESCRIPTION OF EMBODIMENTS

Exemplary embodiments of the invention will now be described with reference to the drawings. While some embodiments will be described in the context of specific fields of application, the embodiments are not limited to this field of application. Further, the features of the various embodiments may be combined with each other unless specifically stated otherwise.

The drawings are to be regarded as being schematic representations and elements illustrated in the drawings are not necessarily shown to scale. Rather, the various elements are represented such that their function and general purpose become apparent to a person skilled in the art.

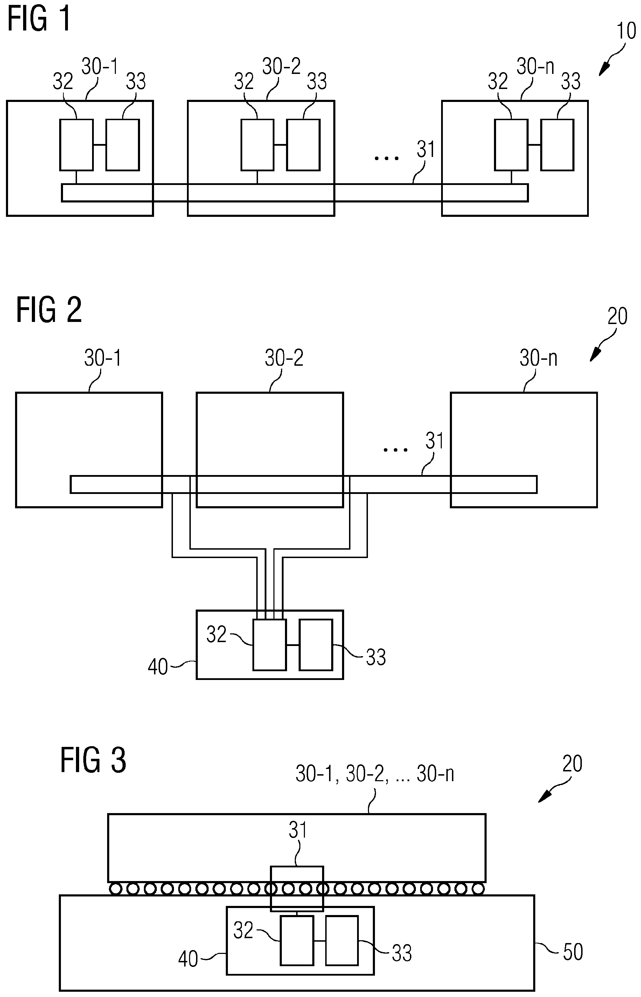

Figs. 1 and 2 illustrate examples of schematically arranged die arrangements 10, 20 according to embodiments of the invention.

The die arrangement 10 of Fig. 1 comprises a plurality of dies 30-1, 30-2, 30-n, and a physical interconnection structure 31 extending between and traversing the plurality of dies 30-1, 30-2, 30-n.

A "die" is a section of semiconducting material on which a logic structure/circuit or a mixed-signal structure/circuit or an analog structure/circuit having a particular function has been established.

The physical interconnection structure 31 comprises an electrically conducting structure extending between and traversing the plurality of dies 30-1, 30-2, 30-n.

An "electrically conducting structure" as used herein may relate to a waveguide, a wire, a through-silicon via (TSV) and the like, made of metal or metal alloy.

The physical interconnection structure 31 may alternatively or additionally comprise an optically conducting structure.

An "optically conducting structure" as used herein may relate to a waveguide or fiber made of a material facilitating conductance of light signals.

The physical interconnection structure 31 is arranged for imparting unpredictable, yet reproducible properties to a digital signal being carried on the physical interconnection structure 31.

These properties particularly relate to physical variations occurring naturally during semiconductor manufacture and enabling differentiation between otherwise identical semiconductors. Such random physical factors introduced during manufacturing may, for instance, result in small geometric variations in terms of waveguide lengths, widths, cross-sectional areas, and the like, which in turn result in variations in signal delays, signal attenuation, circuit capacities, and so forth.

The physical interconnection structure 31 may be part of a physical unclonable function, PUF, unit.

A "physical unclonable function" or "PUF" as used herein may typically relate to a digital/mixed signal circuit element being arranged to impart the above-mentioned unpredictable, yet reproducible properties to a digital signal being carried on a physical interconnection structure, and to amplify such properties.

A "PUF unit" as used herein may relate to a circuit member/structure comprising a PUF and being arranged for imparting, in response to an input (challenge) and using the PUF, the above-mentioned unpredictable, yet reproducible properties, to a corresponding output (response). For instance, a PUF may turn a digital signal (challenge) into a delayed and/or attenuated digital signal (response), and a change of round-trip delay or differential propagation delays may be monitored. Examples of PUF units comprise oscillator PUFs, sum PUFs and arbiter PUFs. A PUF unit is less susceptible to disturbances than single RO structures, but requires more chip resources.

In the non-limiting example of Fig. 1, the respective die 30-1, 30-2, 30-n comprises a monitoring logic 32 for monitoring the above-mentioned properties of the digital signal, in particular against characteristic reference data of the digital signal. In this embodiment, the respective die 30-1, 30-2, 30-n further comprises storage means 33 for the characteristic reference data. The respective die 30-1, 30-2, 30-n may be provided with a monitoring logic 32 and corresponding storage means 33 as necessary. For instance, this may not be the case if the die has no security-critical function.

"Monitoring against" as used herein may relate to observing and evaluating quantities and/or qualities over a period of time, for instance continuously, with reference to (i.e., against) reference quantities and/or qualities.

"Characteristic reference data" as used herein may relate to data determined in and representing a non-tampered state of the underlying die arrangement 10, 20. Accordingly, monitored properties of the digital signal corresponding to the characteristic reference data indicate that the underlying die arrangement 10, 20 is in a non-tampered state. The characteristic reference data may preferably denote one or more value ranges for particular properties of the digital signal and/or for distinction in terms of criticality of any deviation from the non-tampered state (see below).

Modification of a topology of the die arrangement 10, 20, be it by separating/desoldering individual dies for reverse engineering, by attachment of additional probes, or by modification of temperature, supply voltage or other global parameters, results in a corresponding modificationof the above-mentioned properties of the digital signal being monitored. This entails a possibility of detecting a tampering of the die arrangement 10, 20, in particular by monitoring these properties and comparing them against characteristic reference data of the digital signal. Only few chip resources are needed for tamper detection in the arrangement 10, 20. In addition, the above die arrangement 10, 20 may be combined with known approaches of tamper detection or tamper hardening. In general, the arrangement 10, 20 further complicates tampering or reverse engineering.

The respective monitoring logic 32 may be arranged for monitoring semantic properties of the digital signal. For instance, known communication protocols may be used for semantic monitoring of the digital signal, as these communication protocols define the contents/semantics of the digital signal being carried on the physical interconnection structure 31. For instance, the digital signal may be captured for subsequent monitoring of cyclic signal patterns or values.

The respective monitoring logic 32 may alternatively or additionally be arranged for monitoring statistic properties of the digital signal. The statistic properties may affect timing properties within a time window. For example, the number of changes from low to high and from high to low within a time window can be determined, or the relation between time periods within the time window in which the signal is high and time periods within the time window in which the signal is low. Furthermore, statistical properties between multiple signals may be determined, e.g., a cross-correlation.

The respective monitoring logic 32 may alternatively or additionally be arranged for monitoring an eye opening of the digital signal.

An "eye opening" as used herein may relate to a vertical height, horizontal width and/or a shape/contour of an interior of an eye diagram. An eye diagram is generated by superimposing positive and negative pulses of a sampled digital signal such that the superimposed pulses are horizontally centered between their leading and trailing edges. The resulting diagram resembles an opening of an eye, and a vertical height, a horizontal width as well as a shape/contour of which provide indications of an average instantaneous attenuation and an average instantaneous delay affecting the sampled digital signal, respectively. Upon tampering of the physical interconnection structure 31, for instance by moving one of the dies 30-1, 30-2, 30-n further away from the others, variations of the instantaneous attenuation and/or instantaneous delay of the digital signal being carried on the physical interconnection structure 31 may be expected, such that the vertical height and/or horizontal width of the interior of the corresponding eye diagram, or simply the eye opening, is varied.

The physical interconnection structure 31 shown in Fig. 1 forms a ring oscillator, RO, structure. This entails the use of a minimum of chip/interconnection resources. Accordingly, the monitoring logic 32 is arranged for monitoring an oscillation frequency of the digital signal being carried on the physical interconnection structure 31. For instance, the RO structure may comprise a number of logic gates/circuits implementing a feedback loop having a round-trip delay. An oscillation frequency of a digital signal being carried on such a structure depends on the above-mentioned random physical factors introduced during manufacturing. The RO-structure may be self-oscillating, or merely be excited on demand, which entails power energy savings. Alternatively to a RO structure, also linear structures on which oscillations or delays may set in are conceivable.

The characteristic reference data may be machine-learned. For instance, an artificial neural network and known methods of training the same may be used to realize machine learning of the characteristic reference data. This entails a monitoring against automatically learned characteristic reference data without requiring an explicit instance thereof, so that even complex nonlinear properties of the digital data may be monitored and mapped to a non-tampered state or any different state.

In such case, the monitoring logic 32 may, for instance, comprise a tensor processing unit, TPU, for monitoring and evaluating the properties of the digital signal against the machine-learned characteristic reference data. This entails a highly accelerated execution of the machine-learning-based monitoring.

A "tensor processing unit" or "TPU" is an application-specific integrated circuit, ASIC, developed specifically for accelerating neural network machine learning.

Alternatively or additionally, the characteristic reference data may be determined using hard-coded rules. For instance, heuristics may be used to provide the characteristic reference data. This entails a simple and comprehensible way of determining the characteristic reference data.

The characteristic reference data may be determined while reducing time-varying environmental factors. It may particularly be recommendable to eliminate an impact of temperature variations on the die arrangement 10, 20. This entails an improved reliability of the monitoring against the characteristic reference data.

The characteristic reference data may be determined in a provisioning phase during manufacturing of the die arrangement 10, 20. This entails a high amount of flexibility for determining the characteristic reference data.

"Provisioning" as used herein may relate to an act, step or state of being prepared before active service or field use.

Alternatively or additionally, the characteristic reference data may be determined in a provisioning phase during commissioning of the die arrangement 10, 20.

"Commissioning" as used herein may relate to an act, step or state of configuration, after manufacturing and before active service or field use, at the service site, in field, or a comparable environment.

This ensures that the provisioning and the active service or field use are based on comparable environmental factors.

Alternatively or additionally, the characteristic reference data may be determined during use of the die arrangement 10, 20, i.e. during the above-mentioned active service or field use. This entails a capability of the die arrangement 10, 20 of self-calibration or self-recalibration upon variation of the environmental factors or at the request of the device operator.

The storage means 33 of the respective die of the plurality of dies 30-1, 30-2, 30-n comprises at least one of a protected memory area and one or more chip fuses. For instance, a protected memory area may comprise an access-restricted static memory area. Storage means 33 based on one or more chip fuses, which are usually put in place for manufacturer configuration of the die, may also be arranged next to the respective die and statically store binary values/digits depending on their presence or absence. For instance, one or more chip fuses may be used to enable and/or address a particular protected memory area, or permanently store hard-coded characteristic reference data.

In Fig. 1, the monitoring logic 32 of the respective die of the plurality of dies 30-1, 30-2, 30-n comprises an internal logic structure of the respective die. This entails that a new die arrangement 20 may be tamper-hardened using the built-in monitoring logic 32.

By contrast, in the die arrangement 20 illustrated in Fig. 2, an external/separate security IC 40 comprises the monitoring logic 32 in combination with a corresponding storage means 33 for the characteristic reference data. This entails that an existing die arrangement 20 may be tamper-hardened using external monitoring logic 32 as implied by the separate security IC 40 in Fig. 2. An external monitoring logic 32 is connected to the physical interconnection structure 31 at interfaces between the plurality of dies 30-1, 30-2, 30-n, see Fig. 2.

In any case, the monitoring logic 32 is arranged for generating a tamper event upon a detected breach of signal integrity.

A "tamper event" as used herein may relate to any kind of communication or notification that the properties of the digital signal as monitored by the monitoring logic 32 are not in conformity with the characteristic reference data of the digital signal as stored by its corresponding storage means 33, where non-conformity denotes a breach of signal integrity.

Depending on a type of the physical interconnection structure 31, a breach of signal integrity may, for instance, result from non-conformity of a monitored oscillation frequency, of a monitored eye opening (or corresponding eye opening penalty), or of a monitored PUF-response (e.g. an excessive Hamming distance), and the like.

For instance, a tamper event may comprise setting at least one bit in a particular hardware register or memory location to a defined value, triggering interrupt handling by a processor, or setting an external signal to a defined value, such that a response to such a tamper event may be handled or triggered by another logic member. For instance, a cryptographic key store may lock access to or delete a stored security key in response to the detection of a tamper event generated by the monitoring logic 32, or security-critical logic functions may be deactivated.

The monitoring logic 32 may be arranged for logging and/or classifying the tamper event, in particular if the tamper event is passed on to a higher software layer. For instance, depending on a location of tampering, or on a type and/or extent of distortion of an eye diagram, or on an extent of detuning of a RO structure, a tamper event may be classified in terms of its location (e.g. "between dies 1 and 2") and/or criticality. This entails a response at a scale being adequate for and in conformity with the assigned class. The classification may be encoded in the tamper event. This allows classifying the tamper event at a higher level (e.g., in software).

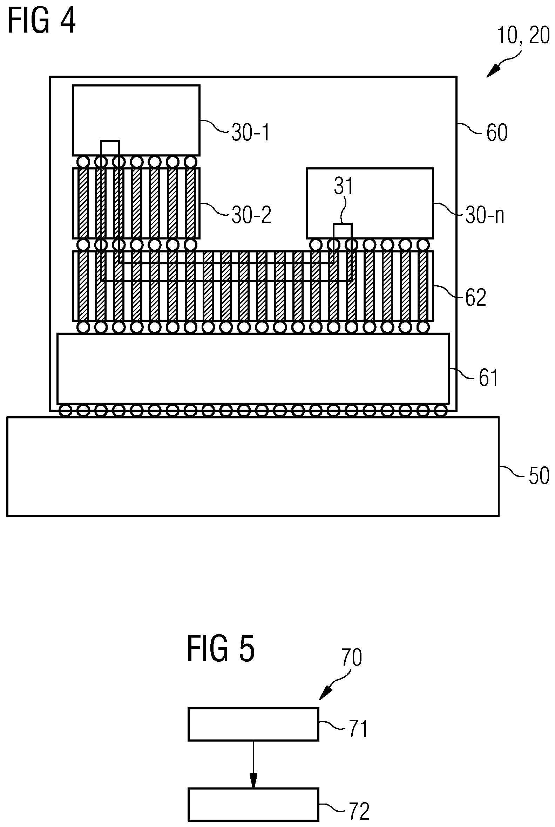

Figs. 3 and 4 illustrate examples of topologically arranged die arrangements 10, 20 according to embodiments of the invention.

The die arrangement 20 of Fig. 3 comprises a system-on-chip, SoC, i.e. a monolithic-integrated arrangement of the plurality of dies 30-1, 30-2, 30-n in a common package. According to the example of Fig. 3, the SoC is arranged and soldered on a PCB 50 using package bumps.

The die arrangement 20 of Fig. 3 further comprises a discretely arranged security IC 40, which may or may not be seen as belonging to the plurality of dies 30-1, 30-2, 30-n, and which is embedded in a PCB 50. The security IC 40 is similar to the one already mentioned in connection with Fig. 2 and may, for instance, comprise a cryptographic key store and be used by the SoC as a cryptographic key store module.

If the physical interconnection structure 31 merely extends between and traverses the plurality of dies 30-1, 30-2, 30-n on the SoC, this entails additional tamper protection by monitoring the integrated die arrangement 20 of the SoC.

If the physical interconnection structure 31 extends between and traverses the plurality of dies 30-1, 30-2, 30-n including the security IC 40, as depicted in Fig. 3, then the security IC 40 may be seen as belonging to the plurality of dies 30-1, 30-2, 30-n as already mentioned. This entails additional tamper protection by monitoring the partially integrated die arrangement 20 comprising the plurality of dies 30-1, 30-2, 30-n of the SoC and of the security IC 40.

The die arrangement 10, 20 of Fig. 4 comprises a hybrid-integrated arrangement of the dies 30-1, 30-2, 30-n in a package 60, denoting a system-in-package, SiP, and including a common substrate 61 arranged and soldered on a PCB 50 using package bumps.

Unlike 2D packaging, in which the hybrid-integrated dies 30-1, 30-2, 30-n would be directly connected to the common substrate 61, the die arrangement 20 of Fig. 4 further comprises a silicon interposer 62 having through-silicon vias, TSVs, through which the hybrid-integrated die 30-n is connected to the common substrate 61, as in 2.5D packaging. The silicon interposer 62 is arranged and soldered on the common substrate 61 using flip-chip bumps, and the hybrid-integrated die 30-n is arranged and soldered on the silicon interposer 62 using micro bumps.

In the die arrangement 10, 20 of Fig. 4, the hybrid-integrated die 30-2 of the hybrid-integrated dies 30-1, 30-2, 30-n additionally has TSVs on its part, through which the hybrid-integrated die 30-1 is connected to the common substrate 61, as in 3D packaging. The hybrid-integrated dies 30-1, 30-2 are arranged and soldered on the respective underlying TSV-providing component 30-2, 62 using micro bumps.

In the embodiment of Fig. 4, the physical interconnection structure 31 extends between and traverses the plurality of dies 30-1, 30-2, 30-n as well as the silicon interposer 62 within the 3D package 60.

In Fig. 4, the monitoring logic 32 of the die arrangement 10, 20 is omitted for reasons of improved visibility, but the die arrangement 10, 20 nevertheless comprises an internal logic structure as in Fig. 1 and/or a separate logic structure as in Fig. 2 as the monitoring logic 32. This entails additional tamper protection of the integrated die arrangement 10, 20.

In summary, the topological die arrangement 10, 20 may be monitored in any conceivable die arrangement having any conceivable packaging variant.

Fig. 5 illustrates a method 70 of an embodiment of the invention, the method 70 being for monitoring a die arrangement 10, 20 of various embodiments.

The die arrangement 10, 20 underlying the method 70 comprises a plurality of dies 30-1, 30-2, 30-n and a physical interconnection structure 31 extending between and traversing the plurality of dies 30-1, 30-2, 30-n.

In step 71, a digital signal is carried 71 on the physical interconnection structure 31, during which the physical interconnection structure 31 is arranged for imparting unpredictable, yet reproducible properties to the digital signal.

In step 72, the properties of the digital signal are monitored 72.

The method 70 may be performed for monitoring the die arrangement 10, 20 of various embodiments.

The technical effects and advantages described above in relation with the die arrangement of various embodiments equally apply to the corresponding method for monitoring the die arrangement having corresponding features.

While die arrangements and methods of monitoring the same of various embodiments have been described, those skilled in the art will appreciate that the present invention is not so limited and that the present invention may be carried out in other ways than those specifically set forth herein without departing from essential characteristics of the invention. The present embodiments are therefore to be considered in all respects as illustrative and not restrictive, and all changes coming within the meaning and equivalency range of the appended claims are intended to be embraced therein.

## Claims

1. A die arrangement (10, 20), comprising
a plurality of dies (30-1, 30-2, 30-n);
a physical interconnection structure (31) extending between and traversing the plurality of dies (30-1, 30-2, 30-n), and being arranged for imparting unpredictable, yet reproducible properties to a digital signal being carried on the physical interconnection structure (31); and
a monitoring logic (32) for monitoring the properties of the digital signal,
the monitoring logic (32) being arranged for monitoring the properties of the digital signal against characteristic reference data of the digital signal, wherein
the die arrangement (10, 20) comprises storage means (33) comprising at least one of a protected memory area for the characteristic reference data and wherein non-conformity of the digital signal as monitored by the monitoring logic (32) with the characteristic reference data denotes a breach of signal integrity of the digital signal.

2. The die arrangement (10, 20) of claim 1,
the physical interconnection structure (31) comprising an electrically conducting structure.

3. The die arrangement (10, 20) of any one of the preceding claims,
the monitoring logic (32) being arranged for monitoring semantics properties of the digital signal.

4. The die arrangement (10, 20) of any one of the preceding claims,
the monitoring logic (32) being arranged for monitoring an eye opening of the digital signal.

5. The die arrangement (10, 20) of any one of the preceding claims,
the physical interconnection structure (31) forming a ring oscillator, RO, structure; and
the monitoring logic (32) being arranged for monitoring an oscillation frequency of the digital signal.

6. The die arrangement (10, 20) of any one of the preceding claims,
the characteristic reference data being machine-learned.

7. The die arrangement (10, 20) of any one of the preceding claims,
the characteristic reference data being determined using hard-coded rules.

8. The die arrangement (10, 20) of any one of the preceding claims,
the characteristic reference data being determined while reducing time-varying environmental factors.

9. The die arrangement (10, 20) of any one of claims 3 to 8, the monitoring logic (32) comprising the storage means (33) for the characteristic reference data.

10. The die arrangement (10, 20) of any one of the preceding claims,
the storage means (33) comprising at least one of a protected memory area and one or more chip fuses.

11. The die arrangement (10, 20) of any one of the preceding claims,
the monitoring logic (32) comprising an internal logic structure of at least one of the plurality of dies (30-1, 30-2, 30-n).

12. The die arrangement (10, 20) of any one of the preceding claims,
the monitoring logic (32) being arranged for generating a tamper event upon a breach of signal integrity.

13. A method (70) of monitoring a die arrangement (10, 20), the die arrangement (10, 20) comprising a plurality of dies (30-1, 30-2, 30-n) and a physical interconnection structure (31) extending between and traversing the plurality of dies (30-1, 30-2, 30-n), the method (70) comprising
carrying (71) a digital signal on the physical interconnection structure (31), the physical interconnection structure (31) being arranged for imparting unpredictable, yet reproducible properties to the digital signal; and
monitoring (72) the properties of the digital signal,
the method (70) being performed for monitoring of the die arrangement (10, 20) of any one of claims 1 - 12.

## Patentansprüche

1. Halbleiterchipanordnung (10, 20), umfassend
eine Vielzahl von Halbleiterchips (30-1, 30-2, 30-n);
eine physische Verbindungsstruktur (31), die sich zwischen der Vielzahl von Halbleiterchips (30-1, 30-2, 30-n) erstreckt und diese durchquert, und die angeordnet ist, um einem digitalen Signal, das auf der physischen Verbindungsstruktur (31) befördert wird, unvorhersehbare, aber reproduzierbare Eigenschaften zu verleihen; und
eine Überwachungslogik (32) zum Überwachen der Eigenschaften des digitalen Signals,
wobei die Überwachungslogik (32) angeordnet ist, um die Eigenschaften des digitalen Signals gegenüber charakteristischen Referenzdaten des digitalen Signals zu überwachen, wobei
die Halbleiterchipanordnung (10, 20) Speichermittel (33) umfasst, die mindestens einen geschützten Speicherbereich für die charakteristischen Referenzdaten umfassen, und wobei eine Nichtkonformität des digitalen Signals, wie durch die Überwachungslogik (32) überwacht, mit den charakteristischen Referenzdaten eine Verletzung der Signalintegrität des digitalen Signals bezeichnet.

2. Halbleiterchipanordnung (10, 20) nach Anspruch 1,
wobei die physische Verbindungsstruktur (31) eine elektrisch leitende Struktur umfasst.

3. Halbleiterchipanordnung (10, 20) nach einem der vorhergehenden Ansprüche,
wobei die Überwachungslogik (32) zum Überwachen semantischer Eigenschaften des digitalen Signals angeordnet ist.

4. Halbleiterchipanordnung (10, 20) nach einem der vorhergehenden Ansprüche,
wobei die Überwachungslogik (32) zum Überwachen einer Augenöffnung des digitalen Signals angeordnet ist.

5. Halbleiterchipanordnung (10, 20) nach einem der vorhergehenden Ansprüche,
wobei die physische Verbindungsstruktur (31) eine Ringoszillator- bzw. RO-Struktur bildet; und
die Überwachungslogik (32) zum Überwachen einer Oszillationsfrequenz des digitalen Signals angeordnet ist.

6. Halbleiterchipanordnung (10, 20) nach einem der vorhergehenden Ansprüche,
wobei die charakteristischen Referenzdaten maschinell erlernt werden.

7. Halbleiterchipanordnung (10, 20) nach einem der vorhergehenden Ansprüche,
wobei die charakteristischen Referenzdaten unter Verwendung hartcodierter Regeln bestimmt werden.

8. Halbleiterchipanordnung (10, 20) nach einem der vorhergehenden Ansprüche,
wobei die charakteristischen Referenzdaten bestimmt werden, während zeitlich variierende Umgebungsfaktoren reduziert werden.

9. Halbleiterchipanordnung (10, 20) nach einem der Ansprüche 3 bis 8,
wobei die Überwachungslogik (32) die Speichermittel (33) für die charakteristischen Referenzdaten umfasst.

10. Halbleiterchipanordnung (10, 20) nach einem der vorhergehenden Ansprüche,
wobei die Speichermittel (33) mindestens eines von einem geschützten Speicherbereich und einer oder mehrerer Chipsicherungen umfassen.

11. Halbleiterchipanordnung (10, 20) nach einem der vorhergehenden Ansprüche,
wobei die Überwachungslogik (32) eine interne Logikstruktur mit mindestens einer der Vielzahl von Halbleiterchips (30-1, 30-2, 30-n) umfasst.

12. Halbleiterchipanordnung (10, 20) nach einem der vorhergehenden Ansprüche,
wobei die Überwachungslogik (32) bei einer Verletzung der Signalintegrität zum Erzeugen eines Manipulationsereignisses angeordnet ist.

13. Verfahren (70) zur Überwachung einer Halbleiterchipanordnung (10, 20), wobei die Halbleiterchipanordnung (10, 20) eine Vielzahl von Halbleiterchips (30-1, 30-2, 30-n) und eine physische Verbindungsstruktur (31) umfasst, die sich zwischen der Vielzahl von Halbleiterchips (30-1, 30-2, 30-n) erstreckt und diese durchquert, wobei das Verfahren (70) Folgendes umfasst:
Befördern (71) eines digitalen Signals auf der physischen Verbindungsstruktur (31), wobei die physische Verbindungsstruktur (31) dazu angeordnet ist, dem digitalen Signal unvorhersehbare, aber reproduzierbare Eigenschaften zu verleihen; und
Überwachen (72) der Eigenschaften des digitalen Signals,
wobei das Verfahren (70) zum Überwachen der Halbleiterchipanordnung (10, 20) nach einem der Ansprüche 1 bis 12 durchgeführt wird.

## Revendications

1. Agencement de puce (10, 20) comprenant
une pluralité de puces (30-1, 30-2, 30-n) ;
une structure d'interconnexion physique (31) s'étendant entre la pluralité de puces (30-1, 30-2, 30-n) et les traversant, et étant agencée pour conférer des propriétés imprévisibles, mais reproductibles, à un signal numérique qui est transporté sur la structure d'interconnexion physique (31) ; et
une logique de surveillance (32) permettant de surveiller les propriétés du signal numérique,
la logique de surveillance (32) étant agencée pour surveiller les propriétés du signal numérique par rapport à des données de référence caractéristiques du signal numérique, dans lequel
l'agencement de puce (10, 20) comprend un moyen de stockage (33) comprenant au moins l'une parmi une zone mémoire protégée pour les données de référence caractéristiques et dans lequel la non-conformité du signal numérique telle que surveillée par la logique de surveillance (32), avec les données de référence caractéristiques indique une violation de l'intégrité de signal du signal numérique.

2. Agencement de puce (10, 20) selon la revendication 1,
la structure d'interconnexion physique (31) comprenant une structure électroconductrice.

3. Agencement de puce (10, 20) selon l'une quelconque des revendications précédentes,
la logique de surveillance (32) étant agencée pour surveiller les propriétés sémantiques du signal numérique.

4. Agencement de puce (10, 20) selon l'une quelconque des revendications précédentes,
la logique de surveillance (32) étant agencée pour surveiller une ouverture de l'œil du signal numérique.

5. Agencement de puce (10, 20) selon l'une quelconque des revendications précédentes,
la structure d'interconnexion physique (31) formant une structure d'oscillateur en anneau (RO) ; et
la logique de surveillance (32) étant agencée pour surveiller une fréquence d'oscillation du signal numérique.

6. Agencement de puce (10, 20) selon l'une quelconque des revendications précédentes,
les données de référence caractéristiques faisant l'objet d'un apprentissage automatique.

7. Agencement de puce (10, 20) selon l'une quelconque des revendications précédentes,
les données de référence caractéristiques étant déterminées en utilisant des règles codées en dur.

8. Agencement de puce (10, 20) selon l'une quelconque des revendications précédentes,
les données de référence caractéristiques étant déterminées tout en réduisant les facteurs environnementaux variables dans le temps.

9. Agencement de puce (10, 20) selon l'une quelconque des revendications 3 à 8,
la logique de surveillance (32) comprenant le moyen de stockage (33) pour les données de référence caractéristiques.

10. Agencement de puce (10, 20) selon l'une quelconque des revendications précédentes,
le moyen de stockage (33) comprenant au moins l'une parmi une zone mémoire protégée et un ou plusieurs fusibles de puce.

11. Agencement de puce (10, 20) selon l'une quelconque des revendications précédentes,
la logique de surveillance (32) comprenant une structure logique interne d'au moins l'une parmi la pluralité de puces (30-1, 30-2, 30-n).

12. Agencement de puce (10, 20) selon l'une quelconque des revendications précédentes,
la logique de surveillance (32) étant agencée pour générer un événement d'altération en cas de violation de l'intégrité de signal.

13. Procédé (70) de surveillance d'un agencement de puce (10, 20), l'agencement de puce (10, 20) comprenant une pluralité de puces (30-1, 30-2, 30-n) et une structure d'interconnexion physique (31) s'étendant entre la pluralité de puces (30-1, 30-2, 30-n) et les traversant, le procédé (70) comprenant
le transport (71) d'un signal numérique sur la structure d'interconnexion physique (31), la structure d'interconnexion physique (31) étant agencée pour conférer au signal numérique des propriétés imprévisibles, mais reproductibles ; et
la surveillance (72) des propriétés du signal numérique,
le procédé (70) étant effectué pour surveiller l'agencement de puce (10, 20) selon l'une quelconque des revendications 1 à 12.
